# EUROPÄISCHE PATENTSCHRIFT

(11) **EP 3 175 093 B1**
(45) Veröffentlichungstag und Bekanntmachung des Hinweises auf die Patenterteilung: **27.06.2018**
(21) Anmeldenummer: 15745415.8
(22) Anmeldetag: 16.07.2015
(51) Int. Cl.: F01L 1/344

(54) **HYDRAULIKVENTIL FÜR EINEN SCHWENKMOTORVERSTELLER EINER NOCKENWELLE**
HYDRAULIC CONTROL VALVE FOR A VANE TYPE PHASING DEVICE
VANNE DE COMMANDE HYDRAULIQUE POUR DÉPHASEUR DE TYPE À PALETTES

(30) Priorität: 30.07.2014 DE 102014011088
(43) Veröffentlichungstag der Anmeldung: 07.06.2017
(73) Patentinhaber: Hilite Germany GmbH, 97828 Marktheidenfeld (DE)
(72) Erfinder: KNECHT, Andreas, D-72072 Tübingen (DE)
(86) Internationale Anmeldenummer: PCT/EP2015/066285
(87) Internationale Veröffentlichungsnummer: WO 2016/016012

(56) Entgegenhaltungen:
- EP-A1- 2 568 204
- US-A1- 2008 164 434
- US-B1- 6 498 416

## Beschreibung

Die Erfindung betrifft ein Hydraulikventil für einen Schwenkmotorversteller gemäß dem Oberbegriff des Patentanspruchs 1.

Aus der DE 10 2009 022 869 ist bereits ein Hydraulikventil für einen Schwenkmotorversteller einer Nockenwelle bekannt. Dieses Hydraulikventil weist einen längsverschiebbar entlang einer Innenlauffläche geführten Kolben zur Verteilung von Hydraulikfluid von einem Versorgungsanschluss P auf zwei benachbarte Arbeitsanschlüsse A, B auf. Der Kolben ist mittels eines elektromagnetisch betätigbaren Stellglieds längsverschiebbar. Der Tankanschluss T ist axial.

Die DE 10 2004 036 096 A1 zeigt ein Hydraulikventil, bei dem die Anschlüsse P-T-B-A radial angeordnet sind.

Der DE 10 2006 042 214 A1 ist ein Hydraulikventil zu entnehmen, dessen Ventilbuchse eine ringförmige Ausnehmung zur Aufnahme eines Dichtelementes aufweist. Dabei ist die Ventilbuchse einteilig mit einem Magnetjoch ausgebildet.

Die WO 2011/015418 A1 zeigt ein Hydraulikventil, dessen Ventilbuchse ein Magnetjoch mit einem verbreiterten Abschnitt in einer Nut aufnimmt, wobei zur Abdichtung zwischen Magnetjoch und Ventilbuchse ein Dichtelement angeordnet ist.

Aufgabe der Erfindung ist es, ein robustes Hydraulikventil für einen Schwenkmotorversteller bereitzustellen.

Die Aufgabe wird erfindungsgemäß durch ein Hydraulikventil für einen Schwenkmotorversteller mit den Merkmalen das Patentanspruchs 1 gelöst. Vorteilhafte Ausgestaltungen mit zweckmäßigen und nicht-trivialen Weiterbildungen der Erfindung sind in den jeweiligen Unteransprüchen angegeben.

Bei dem erfindungsgemäßen Hydraulikventil ist ein Polelement zur Ausbildung eines Magnetfeldes bei Anlegen einer Spannung an einer in einem Stellglied des Hydraulikventils aufgenommenen Spule ausgebildet, welches auf einfache Weise eine magnetische Trennung zwischen einem Polkernkonus und einem Poljoch des Stellgliedes realisiert. Hierzu weist im Bereich der Spule das Polelement eine Außendurchmesserverjüngung, so dass das Poljoch und der Polkernkonus einteilig als ein Polelement ausgebildet sind und dennoch eine funktionsnotwendige Trennung zwischen dem Poljoch und dem Polkernkonus aufgrund der Außendurchmesserverjüngung besteht. Über einen dünnen verbleibenden Verbindungssteg kann zur Erhaltung der Funktion kaum noch das Magnetfeld geführt werden. In anderen Zusammenhang offenbart sind Verjüngungen in der US 2,853,659, der US 6,498,416 B1 und der JP 57164371U.

Eine Abdichtung des Stellgliedes, insbesondere der Spule gegenüber Hydraulikfluid des Hydraulikventil bzw. Hydraulikfluid in einem ankerführenden Bereich des Polelementes ist mit Hilfe eines Dichtelementes erzielt.
Das Dichtelement ist hierzu im Bereich eines der Hydraulikbuchse zugewandt ausgebildeten Endes des Polkernkonus angeordnet und ist in einer dem Ventilgehäuse zugewandten Ringnut des Polkernkonus aufgenommen, wobei das Poljoch, der Polkernkonus und die mit dem Polkernkonus fest verbundene Hydraulikbuchse mit einem gemeinsamen Außendurchmesser in der Bohrung aufgenommen sind und der Polkernkonus einen Absatz der Hydraulikbuchse aufnimmt.
Bevorzugt ist das Dichtelement in Form eines üblichen O-Rings ausgebildet. Somit ist eine Abdichtung insbesondere der Spule gegenüber einem möglichen Eindringungen von Hydraulikfluid bei gleichzeitig einfachem Aufbau des Polelementes realisiert. Eine weitere Abdichtung ist nicht erforderlich.
Befindet sich darüber hinaus ein das Polelement aufweisenden Teils des Stellgliedes in einem motorölnahen Bereich eines Verbrennungsmotors, so ist eine sichere Trennung von Motoröl und Hydraulikfluid gegeben.

Die Aufnahme des Absatzes der Hydraulikbuchse in dem Polkernkonus hat den Vorteil, dass ein um Wesentlichen geschlossenes Hydraulikventil ausgebildet werden kann, so dass ein Ölkreislauf bzw. Schmiermittelkreislauf eines Verbrennungsmotors getrennt ist vom Öl, das innerhalb des elektromagnetischen Stellgliedes bzw. teilweise innerhalb des Hydraulikteils vorgesehen ist.

Der Polkernkonus ist hierzu von seiner Konusspitze abgewandt hohlzylinderartig ausgebildet, so dass die Hydraulikbuchse in den Polkernkonus hineinschiebbar ist, wobei für eine besonderes dichte und stabile Verbindung zwischen dem Polkernkonus und der Hydraulikbuchse eine Presspassung realisiert ist.

Vorzugsweise sind das Poljoch und der Polkernkonus einstückig ausgebildet.

Die Hydraulikbuchse ist aus einem Aluminium-Werkstoff ausgebildet. Der Vorteil ist eine einfache Bearbeitung der Hydraulikbuchse und die Hydraulikbuchse weist den gleichen Wärmeausdehnungskoeffizienten auf, wie das Ventilgehäuse, in welches die Hydraulikbuchse eingesetzt ist. Der Polkernkonus wird aus einem eisenhaltigen Werkstoff gefertigt, da der Polkernkonus aufgrund seiner Funktion den Magnetfluss zu führen hat und magnetisierbar sein muss.

Um die Koaxialität zwischen dem Poljoch und dem Polkernkonus mit einer besonders geringen Toleranz herzustellen, können das Poljoch und der Polkernkonus in einer besonders vorteilhaften Ausgestaltung einstückig gefertigt sein und einen gemeinsamen Durchmesser haben.

Es ist jedoch beispielsweise auch möglich, einen einheitlich durchgehenden Innendurchmesser der Innenlauffläche mit anderen Mitteln zu erzielen. Beispielsweise können das Poljoch und der Polkernkonus aus zwei Teilen besehen, die mit einer nicht magnetisierbaren Schweißnaht zusammengeschweißt sind und anschließend mit einem gemeinsamen Innendurchmesser gebohrt werden.

In einer weiteren Ausgestaltung ist das Hydraulikventil derart ausgebildet, dass der Ölkreislauf bzw. Schmiermittelkreislauf des Verbrennungsmotors getrennt ist von dem Hydraulikfluid des Stellgliedes bzw. der Hydraulikbuchse. Damit wird ein Innenbereich des Hydraulikventils frei von den Schmutzpartikeln und Abriebteilen des Schmiermittelkreislaufes gehalten. Die Gefahr, dass ein im Polelement bewegbar aufgenommener Anker des elektromagnetischen Stellgliedes sich infolge eines Feststoffpartikels gegenüber der inneren Lauffläche im Poljoch festfrisst, sinkt. Eine enge Tolerierung zwischen dem Anker und der inneren Lauffläche im Poljoch ist somit möglich. Eine solche enge Tolerierung verbessert dabei die Koaxialitätsfehler und verringert damit die Querkräfte. Querkräfte nehmen nämlich mit Koaxialitätsfehlern zu. Eine enge Tolerierung ist aber nur dann möglich, wenn sich keine Feststoffpartikel zwischen dem Anker und der Innenlauffläche festsetzen können. Wenn sich dort Feststoffpartikel festfressen, könnte der Anker zwar über hohe Magnetkräfte freigerissen werden. Dafür muss die Spule bzw. der Elektromagnet aber übermäßig stark dimensioniert sein, was negativ hinsichtlich des Wirkungsgrades ist und überdies die schädlichen Querkräfte wieder erhöht.

Der Anker und/oder das Poljoch können zur Trennung an der Oberfläche mit einer nicht magnetisierbaren Schicht versehen sein. Alternativ ist es auch möglich, eine nicht magnetisierbare topfförmige Hülse einzusetzen. Solche topfförmigen Hülsen sind beispielsweise offenbart in der DE 10 2009 043 320 B4 und der DE 10 2010 061 219.7. Eine weitere Alternative für das topfförmige Bauteil ist ein topfförmiges Poljoch, wie ein solches bereits in der US 6,202,699 B1 offenbart ist.

Um die hydraulische Trennung zwischen dem Motorölkreislauf und dem elektromagnetischen Stellglied zu erreichen, ist die Reihenfolge der Anschlüsse in axialer Richtung T1-A-P-B-T2 vorteilhaft. Dabei ist von besonderem Vorteil, dass die Tankanschlüsse T1 und T2 einen geringeren Druck aufweisen, als der Versorgungsanschluss P und die Arbeitsanschlüsse A, B so dass sich zwischen den Bereich des hohen Druckes und dem praktisch druckfreien Innenbereich des Hydraulikventils die nahezu druckfreien Tankanschlüsse T1 und T2 befinden, die das verschmutzte Motoröl nach außen zum Tank und über den Ölfilter leiten.

Gemäß einem Vorteil der Erfindung ist das Hydraulikventil des Schwenkmotorverstellers als externes bzw. dezentrales Hydraulikventil ausgeführt. Bei üblichen dezentralen Hydraulikventilen ist nämlich entsprechend der erfindungsgemäßen Anschluss-Reihenfolge T1-A-P-B-T2 kein axialer Zugang/Ablauf von Öl vorgesehen. Außer dezentralen Hydraulikventilen gibt es noch Zentralventile. Zentralventile sind radial innerhalb der Rotornabe des Schwenkmotorverstellers angeordnet. Die Erfindung kann - mit Nachteilen - grundsätzlich auch bei Zentralventilen Anwendung finden.

Da beim erfindungsgemäßen Hydraulikventil der Innenbereich frei vom Öldruck des Versorgungsanschlusses P ist, wirken keine hydraulischen Axialkräfte auf den Kolben.

Weitere Vorteile der Erfindung gehen aus den weiteren Patentansprüchen, der Beschreibung und der Zeichnung vor.

Die Erfindung ist nachfolgend anhand von zwei Ausführungsbeispielen näher erläutert.

Dabei zeigen
Fig. 1 einen Schwenkmotorversteller in einer geschnittenen Ansicht,
Fig. 2 in einem Halbschnitt ein Hydraulikventil zur Verstellung des Schwenkmotorverstellers gemäß Fig. 1 und
Fig. 3 ein Detail aus Fig. 2 im Bereich eines Stellgliedes des Hydraulikventils.

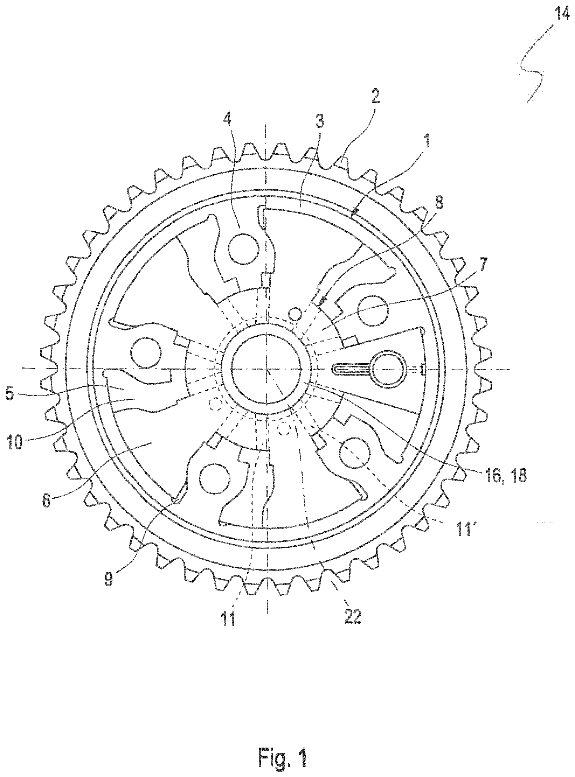

Mit einem Schwenkmotorversteller 14 gemäß Fig. 1 wird während des Betriebes eines Verbrennungsmotors die Winkellage an einer Nockenwelle 18 eines nicht näher dargestellten Verbrennungsmotors gegenüber einem Antriebsrad 2 stufenlos verändert. Durch Verdrehen der Nockenwelle 18 werden die Öffnungs- und Schließzeitpunkte von Gaswechselventilen des Verbrennungsmotors so verschoben, dass der Verbrennungsmotor bei der jeweiligen Drehzahl seine optimale Leistung aufweisen kann.

Der Schwenkmotorversteller 14 weist einen zylindrischen Stator 1 auf, der drehfest mit dem Antriebsrad 2 verbunden ist. Im Ausführungsbeispiel ist das Antriebsrad 2 ein Kettenrad, über das eine nicht näher dargestellte Kette geführt ist. Das Antriebsrad 2 kann aber auch ein Zahnriemenrad sein, über das ein Antriebsriemen als Antriebselement geführt ist. Über dieses Antriebselement und das Antriebsrad 2 ist der Stator 1 mit der Kurbelwelle antriebsverbunden.

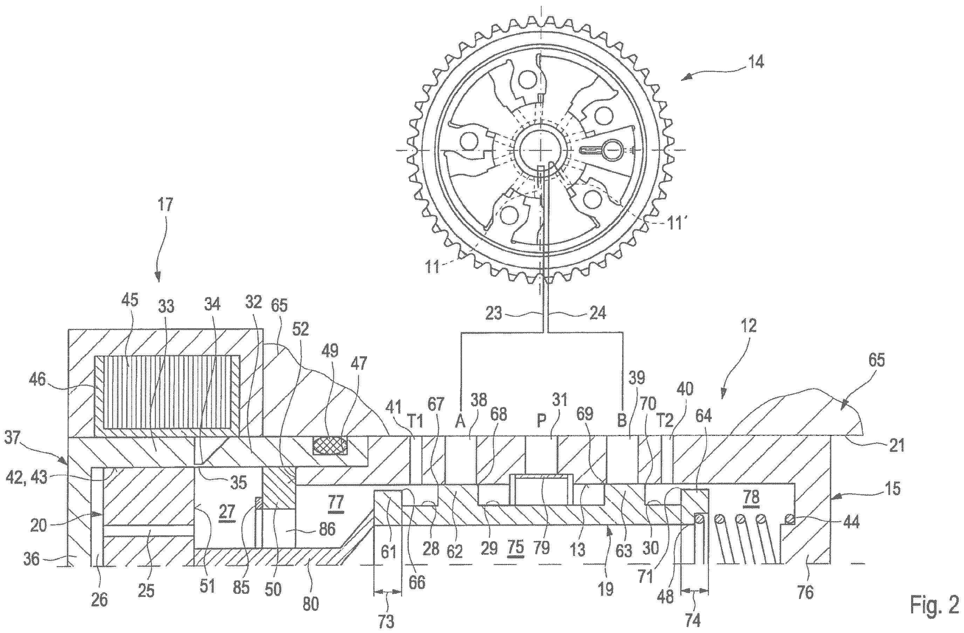

Der Stator 1 umfasst einen zylindrischen Statorgrundkörper 3, an dessen Innenseite radial nach innen in gleichen Abständen Stege 4 abstehen. Zwischen benachbarten Stegen 4 werden Zwischenräume 5 gebildet, in die, über ein in Fig. 2 näher dargestelltes Hydraulikventil 12 gesteuert, Druckmedium eingebracht wird. Das Hydraulikventil 12 ist dabei als dezentrales Hydraulikventil 12 ausgeführt. Zwischen benachbarten Stegen 4 ragen Flügel 6, die radial nach außen von einer zylindrischen Rotornabe 7 eines Rotors 8 abstehen. Diese Flügel 6 unterteilen die Zwischenräume 5 zwischen den Stegen 4 jeweils in zwei Druckkammern, in eine erste Druckkammer 9 und in eine zweite Druckkammer 10.

Die Stege 4 liegen mit ihren Stirnseiten dichtend an der Außenmantelfläche der Rotornabe 7 an. Die Flügel 6 ihrerseits liegen mit ihren Stirnseiten dichtend an der zylindrischen Innenwand des Statorgrundkörpers 3 an.

Der Rotor 8 ist drehfest mit der Nockenwelle 18 verbunden. Um die Winkellage zwischen der Nockenwelle 18 und dem Antriebsrad 2 zu verändern, wird der Rotor 8 relativ zum Stator 1 gedreht. Hierzu wird je nach gewünschter Drehrichtung das Druckmedium in der ersten Druckkammer 9 oder der zweiten Druckkammer 10 unter Druck gesetzt, während die jeweils anderen Druckkammer, die zweite Druckkammer 10 bzw. die erste Druckkammer 9, zu einem Tank hin entlastet werden. Um den Rotor 8 gegenüber dem Stator 1 entgegen dem Uhrzeigersinn in die dargestellte Stellung zu verschwenken, wird vom Hydraulikventil 12 ein ringförmiger erster Rotorkanal 23 in der Rotornabe 7 unter Druck gesetzt. Von diesem ersten Rotorkanal 23 führen dann weitere zweite Kanäle 11 in die zweiten Druckkammern 10.

Dieser erste Rotorkanal 23 ist einem ersten Arbeitsanschluss A des Hydraulikventils 12 zugeordnet. Um den Rotor 8 hingegen im Uhrzeigersinn zu verschwenken, wird vom Hydraulikventil 12 ein zweiter ringförmiger Rotorkanal 24 in der Rotornabe 7 unter Druck gesetzt. Dieser zweite Rotorkanal 24 ist einem zweiten Arbeitsanschluss B des Hydraulikventils 12 zugeordnet. Diese beiden Rotorkanäle 23, 24 sind bezüglich einer Zentralachse 22 des Schwenkmotorverstellers 14 axial beabstandet zueinander angeordnet. Von diesem zweiten Rotorkanal 24 führen dann weitere erste Kanäle 11' in die ersten Druckkammern 9.

Der Schwenkmotorversteller 14 ist auf die als Hohlrohr 16 ausgeführte gebaute Nockenwelle 18 aufgesetzt. Dazu ist der Rotor 8 auf die Nockenwelle 18 gesteckt. Der Schwenkmotorversteller 14 ist mittels des in Fig. 2 ersichtlichen elektromagnetisch betätigten Hydraulikventils 12 schwenkbar.

Das elektromagnetisch betätigte Hydraulikventil 12 mit einem Ventilgehäuse 65 weist ein elektromagnetisches Stellglied 17 und eine Hydraulikbuchse 15 auf. Die Hydraulikbuchse 15 ist in einer Bohrung 21 des Ventilgehäuses 65 ausgebildet. Innerhalb dieser Hydraulikbuchse 15 ist ein hohler Kolben 19 entlang einer ersten Innenlauffläche 13 gegen die Kraft einer Schraubendruckfeder 44 verschiebbar geführt. Dazu stützt sich die Schraubendruckfeder 44 einerseits am Kolben 19 und andererseits gehäusefest an der Hydraulikbuchse 15 ab. Zur Anlage für die Schraubendruckfeder 44 ist innerhalb des Kolbens 19 ein Absatz 48 vorgesehen, dem sich zum Ende des Kolbens 19 hin eine radiale Federführung anschließt.

Am nockenwellenaußenseitigen - d.h. hinteren - Ende der Hydraulikbuchse 15 liegt an dem Kolben 19 ein Anker 20 des elektromagnetischen Stellglieds 17 an.

Die Hydraulikbuchse 15 weist axial beabstandet zueinander fünf Ausnehmungen auf, eine erste Ausnehmung 31, eine zweite Ausnehmung 38, eine dritte Ausnehmung 39, eine vierte Ausnehmung 40 sowie eine fünfte Ausnehmung 41. Davon bilden die vier axial außen angeordneten Ausnehmungen, die fünfte Ausnehmung 41, die zweite Ausnehmung 38, die dritte Ausnehmung 39 und die vierte Ausnehmung 40 die Arbeitsanschlüsse A, B und zwei Tankanschlüsse T1, T2. Die axial mittlere Ausnehmung, die erste Ausnehmung 31, bildet den Versorgungsanschluss P. Der Versorgungsanschluss P weist innenseitig der ersten Ausnehmung 31 eine Innenringnut auf, in die ein bandförmiges Rückschlagventil 79 eingesetzt ist. Diese insgesamt fünf Ausnehmungen 41, 38, 31, 39, 40 korrespondieren mit drei Steuernuten, einer ersten Steuernut 28, einer zweiten Steuernut 29 und einer dritten Steuernut 30, welche an der Außenseite des Kolbens 19 umlaufen.

Damit bilden sich zwischen den Steuernuten 28, 29, 30 und den angrenzenden axial äußeren Ausnehmungen 41, 38, 39, 40 sogenannte Steuerkanten. An diesen Steuerkanten wird die Menge des durchgeleiteten Hydraulikfluids bestimmt, wobei an diesen Steuerkanten bei entsprechend großer Überdeckung der Fluss von Hydraulikfluid nahezu gänzlich gesperrt werden kann. Bei gesperrter Steuerkante bildet sich somit ein Dichtspalt zwischen dem Kolben 19 und der Hydraulikbuchse 15.

Die fünfte Ausnehmung 41, die zweite Ausnehmung 38, die erste Ausnehmung 31, die dritte Ausnehmung 39 und die vierte Ausnehmung 40 folgen dabei aufeinander in der Reihenfolge T1-A-P-B-T2. In anderen Worten gehen von der ersten Innenlauffläche 13 axial beabstandet aufeinander folgend
- der erste Tankanschluss T1 zum Ausleiten von Hydraulikfluid von dem ersten Arbeitsanschluss A,
- der erster Arbeitsanschlusses A zur Führung von Hydraulikfluid in die erste Druckkammer 9 des Schwenkmotorverstellers 14,
- der Versorgungsanschluss P,
- der zweite Arbeitsanschlusses B zur Führung von Hydraulikfluid in die der ersten Druckkammer 9 entgegen gerichteten zweite Druckkammer 10 des Schwenkmotorverstellers 14 und
- der zweite Tankanschluss T2 zum Ausleiten von Hydraulikfluid von dem zweiten Arbeitsanschluss B
ab.

Die beiden äußersten Ausnehmungen, die fünfte Ausnehmung 41 und die vierte Ausnehmung 40, sind den beiden Tankanschlüssen T1, T2 zugeordnet. Die zweite Ausnehmung 38 ist dem ersten Arbeitsanschluss A zugehörig und zur Führung von Hydraulikfluid in die der einen Schwenkrichtung zugeordneten zweiten Druckkammern 10 des Schwenkmotorverstellers 14 vorgesehen. Überdies kann über diesen ersten Arbeitsanschluss A auch Hydraulikfluid zu dem ersten Tankabfluss T1 gefördert werden.

Die zwischen der dem zweiten Tankanschluss T2 zugeordneten vierten Ausnehmung 40 und der dem Versorgungsanschluss P zugeordneten ersten Ausnehmung 31 positionierte dritte Ausnehmung 39 ist dem zweiten Arbeitsanschluss B zugehörig und zur Führung von Hydraulikfluid in die ersten Druckkammern 9 vorgesehen. Überdies kann über diesen Arbeitsanschluss B auch Hydraulikfluid aus den ersten Druckkammern 9 zu einem zweiten Tankabfluss T2 gefördert werden.

Zur Trennung der drei Steuernuten 28, 29, 30 sind an der Außenseite des Kolbens 19 vier Stege, ein erster Steg 61, ein zweiter Steg 62, ein dritter Steg 63 und ein vierter Steg 64 ausgebildet. In der zeichnerisch dargestellten mittleren Sperrstellung des Kolbens 19, werden beide Arbeitsanschlüsse A, B im stärkeren Maß mit Druck beaufschlagt, als das Hydraulikfluid abgeführt werden kann. Damit ist der Schwenkmotorversteller 14 in dieser Winkelstellung fixiert. In dieser mittleren Sperrstellung sind die beiden Ausnehmungen der beiden Arbeitsanschlüsse A, B von dem zweiten Steg 62 und dem dritten Steg 63 verdeckt.

Eine dritte Steuerkante 68 des zweiten Stegs 62 und eine vierte Steuerkante 69 des dritten Stegs 63 haben eine geringere Überdeckung als die voneinander hinfort weisenden Steuerkanten, eine zweite Steuerkante 67 des zweiten Stegs 62 und eine fünfte Steuerkante 70 des dritten Stegs 63.

Die erste Steuernut 28 und die dritte Steuernut 30 werden somit zu den Arbeitsanschlüssen A, B hin von der ersten Steuerkante 66 bzw. der sechsten Steuerkante 71 begrenzt, welche am ersten Steg 61 bzw. am vierten Steg 64 einander zugewandt sind. Axial nach außen werden die erste Steuernut 28 und die dritte Steuernut 30 von den sich der ersten Steuerkante 66 bzw. der sechsten Steuerkante 71 anschließenden Stege, somit vom ersten Steg 61 und vom vierten Steg 64 begrenzt.

Zwischen der ersten Innenlauffläche 13 und dem ersten Steg 61 bzw. dem vierten Steg 64 sind Radialspalte über eine erste Spaltlänge 73 bzw. eine zweite Spaltlänge 74 ausgebildet. Über diese Spaltlängen 73, 74 ist somit eine begrenzte Dichtheit gegenüber einem Innenraum 75 innerhalb des hohlen Kolbens 19 ausgebildet.

Dieser Innenraum 75 innerhalb des Kolbens 19 verbindet zwei axial neben dem Kolben 19 angeordnete Räume, einen dritten Raum 77 und einen vierten Raum 78. Der an dem vom Stellglied 17 abgewandt ausgebildete vierte Raum 78 ist mittels eines Verschluss 76 hydraulisch verschlossen. Dieser Verschluss 76 verschließt ähnlich einem Topfboden die Hydraulikbuchse 15. Der dritte Raum 77 ist mittels eines sich der ersten Innenlauffläche 13 anschließenden topfförmigen Bauteils verschlossen, das als Poltopf 37 ausgeführt ist.

Damit ist der gesamte Innenraum 75 innerhalb des hohlen Kolbens 19 und des Poltopfes 37 hydraulisch getrennt von den ohnehin nur unter geringem Druck stehenden äußeren Steuernuten, der ersten Steuernut 28 und der dritten Steuernut 30 bzw. den an diesen angeschlossenen Tankanschlüssen T1, T2. Hingegen ist der relativ hohe Druck am Versorgungsanschluss P mittels der beiden axial inneren Stege, dem zweiten Steg 62 und dem dritten Steg 63 von den äußeren Steuernuten, der ersten Steuernut 28 und der dritten Steuernut 30, fern gehalten. Infolge dieser vorgenannten Trennungen und dem niedrigen Druck in den axial äußeren Steuernuten 28, 30 gibt es kaum einen Austausch von Hydraulikfluid zwischen einem axial vor einem innerhalb des Poltopfes 37 axial bewegbaren Anker 20 des Stellglieds 17 gebildeten ersten Raum 26 und einem axial hinter dem Anker 20 gebildeten zweiten Raum 27. Damit wird der sehr eng tolerierte Spalt zwischen dem Anker 20 und einer zweiten Innenlauffläche 43 des Poltopfes 37 weitestgehend frei von Schmutzpartikeln aus dem Motorölschmiermittelkreislauf gehalten, an welchen der Schwenkmotorversteller 14 angeschlossen ist.

Die Hydraulikbuche 15 ist axial fest mit einem Polkernkonus 32 des Poltopfes 37 verbunden. Wie Fig. 1 zu entnehmen ist, weist die Hydraulikbuchse 15 hierfür einen Absatz mit einem verringerten Durchmesser auf, mit welchem sie in den Polkernkonus 32 eingepresst ist. Das Poljoch 33, der Polkernkonus 32 und die mit dem Polkernkonus 32 fest verbundene Hydraulikbuchse 15 weisen einen gleichen Außendurchmesser auf und sind mit diesem gemeinsamen Außendurchmesser in der Bohrung 21 aufgenommen.

Der magnetisierbare Polkernkonus 32 kann einteilig mit einem Poljoch 33 des Poltopfes 37 gefertigt sein. Um dennoch eine funktionsnotwendige Trennung zwischen dem Polkernkonus 32 und dem Poljoch 33 zu schaffen, läuft der Polkernkonus 32 an der Konusspitze 34 zu einer Außendurchmesserverengung 35 aus. Dieser Außendurchmesserverengung 35 schließt sich das Poljoch 33 an. Das Poljoch 33 ist geschlossen mit einem Boden 36 ausgeführt. Damit umfasst der Poltopf 37, dessen Innenseite 42 die zweite Innenlauffläche 43 für den Anker 20 bildet, den Polkernkonus 32, das Polkernjoch 33 sowie den Boden 36 und ist mit einem durchgehenden Innendurchmesser 82 ausgeführt.

Radial den Poltopf 37 umfassend ist eine elektrische Spule 45 vorgesehen. Diese Spule 45 besteht aus einem Spulenträger 46 aus Kunststoff, auf den die Drahtwicklung aufgebracht ist.

Der Poltopf 37 weist an dessen der Hydraulikbuchse 15 zugewandtem Ende eine außen umlaufende Ringnut 47 auf. In diese Ringnut 47 ist ein Dichtelement 49 in Form eines O-Rings eingesetzt. Der O-Ring 49 dichtet den Poltopf 37 gegen die Bohrung 21 ab. Damit kann Hydraulikfluid innerhalb der Bohrung 21 nicht am dem Stellglied 17 zugewandt ausgebildeten Mündungsbereich der Bohrung 21 austreten. Alternativ kann der O-Ring 49 auch in einer Ringnut in der Bohrung 21 positioniert sein und radial am Poltopf 37 dichten.

Der Anker 20 weist eine Durchgangsbohrung 25 auf, die sicherstellt, dass Hydraulikfluid bzw. ein Gemisch aus Hydraulikfluid und Luft zwischen dem ersten Raum 26 und dem zweiten Raum 27 ausgetauscht werden kann. Eine erste Stirnseite 51 des Ankers 20 ist einer zweiten Stirnseite 52 der Hydraulikbuchse 15 zugewandt. Zwischen diesen Stirnseiten 51, 52 ist ein Polkernring 50 innerhalb des Poltopf 37 eingepresst. Dieser Polkernring 50 ist ebenso magnetisierbar wie der Polkernkonus 32 und liegt damit im magnetischen Feld, welches entsteht wenn an die Spule 45 eine Spannung angelegt wird.

Da der Kolben 19 an seinen beiden Enden den Tankanschlüssen T1, T2 zugeordnete Steuernuten, die erste Steuernut 28 und die dritte Steuernut 30 aufweist, sind der erste Tankanschluss T1 und der zweite Tankanschluss T2 vom ersten Steg 61 bzw. vom vierten Steg 64 axial nach außen begrenzt sind. Somit sind die sich dem ersten Steg 61 und dem vierten Steg 64 axial anschließenden Räume, der dritte Raum 77 und der vierte Raum 78 in jeder Kolbenstellung hydraulisch von
- dem ersten Tankanschluss T1,
- dem ersten Arbeitsanschluss A,
- dem Versorgungsanschluss P,
- dem zweiten Arbeitsanschluss B und
- dem zweiten Tankanschluss T2
getrennt.

Der Kolben 19 ist als Drehteil ausgeführt, welches über ein Abstützteil 80 an dem Anker 20 abgestützt ist. Das Abstützteil 80 kann alternativ als in den Kolben 19, oder Anker 20, eingepresster Stößel ausgeführt sein, der Ausnehmungen zum Durchtritt von Hydraulikfluid zwischen dem Innenraum 75 und dem dritten Raum 77 aufweist.

Da der Innenbereich innerhalb des Hydraulikventils 12 frei vom Öldruck des Versorgungsanschlusses P ist, ist, wirken keine hydraulischen Axialkräfte auf den Kolben 19.

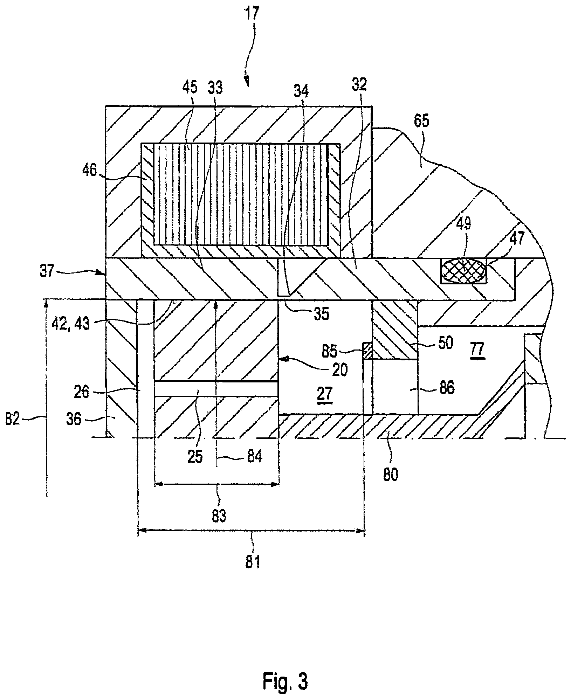

Fig. 3 zeigt ein Detail aus Fig. 2 im Bereich des Stellgliedes 17. Dabei ist ersichtlich, dass der Anker 20 über eine Länge 81 entlang der zweiten Innenlauffläche 43 geführt ist. Über diese Länge ist der Poltopf 37 einteilig mit dem einheitlich durchgehenden Innendurchmesser 82 gefertigt. Die Länge 81 erstreckt sich axial über
- das Poljoch 33,
- eine Drosselstelle am Poljoch 33 und
- zumindest einen Teil des Polkernkonus 32.
Die Drosselstelle entspricht der Außendurchmesserverengung 35.

Der Anker 20 weist auf über seine Ankerlänge 83 einen gleichbleibenden Ankerdurchmesser 84 auf. Der Anker 20 ist zwischen zwei axialen Anschlägen verschiebbar, wobei der eine Anschlag vom Boden 36 des Poltopfes 37 gebildet wird, und der andere axiale Anschlag von einer Antiklebscheibe 85 gebildet wird, welche am Polkernring 50 anliegt.

Der Anker 20 weist auf seiner Mantelfläche eine trennende Schicht auf. Diese trennt den Anker 20 von dem Poltopf 37. Eine solche Beschichtung kann beispielsweise Nickel-Phosphor bzw. chemisch Nickel sein. Weiterhin ist Teflon, ein Gleitlack oder eine Plasmanitrierung möglich. Diese verschiedenen Beschichtungen können alternativ auch auf der zweiten Innenlauffläche 43 aufgebracht sein, um den Anker 20 magnetisch vom Poltopf 37 zu trennen. Eine beidseitige Beschichtung ist zwar möglich - jedoch steigen mit der Dicke der Beschichtung die Fluchtungsfehler bzw. Koaxialitätstoleranzen und damit die Querkräfte. Hohe Querkräfte bewirken neben einem schlechten Wirkungsgrad einen hohen Verschleiß bzw. Abrieb zwischen dem Anker 20 und dem Poltopf 37. Eine solche Lagerung, bei welcher die Beschichtung die trennende Schicht und zugleich die Lagerschicht über die Mantelfläche des Ankers bildet, wird auch als Bauchlagerung bezeichnet.

In einer alternativen Ausführungsform sind im Hydraulikventil 12 weitere Rückschlagventile vorgesehen, mit denen Nockenwellenwechselmomente zur schnellen Verstellung bzw. zur Verstellung mit geringem Öldruck nutzbar sind. Der Öldruck ist beispielsweise dann sehr gering, wenn viele Verbraucher vom Hydraulikkreis abgehen oder wenn die Ölpumpe zur Verringerung des Kraftstoffverbrauchs sehr klein dimensioniert ist. Solche niedrigen Drücke können unter 1 bar liegen.

Das Rückschlagventil muss nicht als bandförmiges Rückschlagventil ausgeführt sein, welches in eine Ringnut des Hydraulikventils 12 eingesetzt ist. Es ist beispielsweise auch möglich, das Rückschlagventil als Kugelrückschlagventil in einem trichterförmigen Ventilsitz auszuführen, wie ein solches Kugelrückschlagventil bereits aus der DE 10 2007 012 967 B4 bekannt ist.

In einer alternativen Ausführungsform weist der Polkernring 50 einen im Verhältnis zu seinem Außendurchmesser kleinen Innendurchmesser auf. Dabei ist jedoch dennoch über zumindest einen Durchlass 86 sichergestellt, das Hydraulikfluid in zwischen den Räumen 77, 27 ausgetauscht werden kann.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

### Bezugszeichenliste

1 Stator
2 Antriebsrad
3 Statorgrundkörper
4 Stege
5 Zwischenräume
6 Flügel
7 Rotornabe
8 Rotor
9 Erste Druckkammer
10 Zweite Druckkammer
11 Kanal
11' Kanal
12 Hydraulikventil
13 Erste Innenlauffläche
14 Schwenkmotorversteller
15 Hydraulikbuchse
16 Hohlrohr
17 Stellglied
18 Nockenwelle
19 Kolben
20 Anker
21 Bohrung
22 Zentralachse
23 Erster Rotorkanal
24 Zweiter Rotorkanal
25 Durchgangsbohrung
26 Erster Raum
27 Zweiter Raum
28 Erste Steuernut
29 Zweite Steuernut
30 Dritte Steuernut
31 Erste Ausnehmung
32 Polkernkonus
33 Poljoch
34 Konusspitze
35 Außendurchmesserverengung
36 Boden
37 Poltopf
38 Zweite Ausnehmung
39 Dritte Ausnehmung
40 Vierte Ausnehmung
41 Fünfte Ausnehmung
42 Innenseite
43 Zweite Innenlauffläche
44 Schraubendruckfeder
45 Spule
46 Spulenträger
47 Ringnut
48 Absatz
49 Dichtelement
50 Polkernring
51 Erste Stirnseite
52 Zweite Stirnseite
53 erste Steuerkante
54 zweite Steuerkante
55 dritte Steuerkante
56 vierte Steuerkante
57 fünfte Steuerkante
58 sechste Steuerkante
59 siebte Steuerkante
60 achte Steuerkante
61 Erster Steg
62 Zweiter Steg
63 Dritter Steg
64 Vierter Steg
65 Ventilgehäuse
66 Erste Steuerkante
67 Zweite Steuerkante
68 Dritte Steuerkante
69 Vierte Steuerkante
70 Fünfte Steuerkante
71 Sechste Steuerkante
72 -
73 Erste Spaltlänge
74 Zweite Spaltlänge
75 Innenraum
76 Verschluss
77 Dritter Raum
78 Vierter Raum
79 Rückschlagventil
80 Abstützteil
81 Länge
82 Innendurchmesser
83 Ankerlänge
84 Ankerdurchmesser
85 Antiklebscheibe
86 Durchlass
A erster Arbeitsanschluss
B zweiter Arbeitsanschluss
P Versorgungsanschluss
T1 erster Tankabfluss
T2 zweiter Tankabfluss

## Patentansprüche

1. Hydraulikventil (12) für einen Schwenkmotorversteller (14) einer Nockenwelle (18), mit einem entlang einer ersten Innenlauffläche (13) einer Hydraulikbuchse (15) des Hydraulikventils (12) längsverschiebbar geführten Kolben (19) zur Verteilung von Hydraulikfluid von einem Versorgungsanschluss (P) auf zwei benachbarte Arbeitsanschlüsse (A, B), wobei der Kolben (19) mittels eines elektromagnetisch betätigbaren Stellglieds (17) längsverschiebbar ist, und wobei das Stellglied (17) ein hohl ausgebildetes Polelement (37) aufweist, welches zur Aufnahme eines im Polelement (37) axial verschiebbaren Ankers (20) ausgebildet ist, wobei eine Spule (45) des Stellgliedes (17) das Polelement (37) zumindest teilweise umfassend ausgestaltet ist, derart, dass bei Anlegen einer Spannung an die Spule (45) ein magnetisches Feld zur Bewegung des Ankers (20) im Stellglied (17) ausgebildet ist, und wobei die von dem Hydraulikfluid durchströmbare Hydraulikbuchse (15) an das Polelement (37) zumindest angrenzend ausgebildet ist, und wobei das Polelement (37) im Bereich der Spule (45) eine Verjüngung seines Außendurchmessers in Form einer Außendurchmesserverengung (35) aufweist, derart, dass ausgehend von der Außendurchmesserverengung (35) in Richtung der Hydraulikbuchse (15) das Polelement (37) in Form eines Polkernkonus (32) und in die von der Hydraulikbuchse (15) abgewandte Richtung in Form eines Poljochs (33) ausgebildet ist, und wobei die Hydraulikbuchse (15) in einer Bohrung (21) eines Ventilgehäuses (65) des Hydraulikventils (12) aufgenommen ist,
**dadurch gekennzeichnet, dass**
der Polkernkonus (32) im Bereich seines der Hydraulikbuchse (15) zugewandt ausgebildeten Endes ein in einer dem Ventilgehäuse (65) zugewandten Ringnut (47) des Polkernkonus (33) aufgenommenes Dichtelement (49) zur Abdichtung der Bohrung (21) gegenüber der Spule (45) aufweist, wobei das Poljoch (33), der Polkernkonus (32) und die mit dem Polkernkonus (32) fest verbundene Hydraulikbuchse (15) mit einem gemeinsamen Außendurchmesser in der Bohrung (21) aufgenommen sind und der Polkernkonus (33) einen Absatz der Hydraulikbuchse (15) aufnimmt.

2. Hydraulikventil (12) nach Patentanspruch 1,
**dadurch gekennzeichnet, dass**
die Hydraulikbuchse (15) mit Hilfe einer Presspassung in den Polkernkonus (33) eingefügt ist.

3. Hydraulikventil (12) nach Patentanspruch 1 oder 2,
**dadurch gekennzeichnet, dass** das Poljoch (33) und der Polkernkonus (32) einstückig ausgebildet sind.

4. Hydraulikventil (12) nach einem der vorhergehenden Patentansprüche,
**dadurch gekennzeichnet, dass**
die Hydraulikbuchse (15) aus einem Aluminium-Werkstoff ausgebildet ist.

5. Hydraulikventil (12) nach einem der vorhergehenden Patentansprüche,
**dadurch gekennzeichnet, dass**
axial beabstandet aufeinander folgend:
- ein erster Tankanschluss (T1) zum Ausleiten von Hydraulikfluid von dem ersten Arbeitsanschluss (A),
- der erster Arbeitsanschlusses (A) zur Führung von Hydraulikfluid in eine erste Druckkammer (9) des Schwenkmotorverstellers (14),
- der Versorgungsanschluss (P),
- der zweite Arbeitsanschlusses (B) zur Führung von Hydraulikfluid in eine der ersten Druckkammer (9) entgegen gerichteten zweiten Druckkammer (10) des Schwenkmotorverstellers (14) und
- ein zweiter Tankanschluss (T2) zum Ausleiten von Hydraulikfluid von dem zweiten Arbeitsanschluss (B)
von der ersten Innenlauffläche (13) abgehen, wobei der Kolben (19) eine dem ersten Tankanschluss T1 zugeordnete erste Steuernut (28) und eine dem zweiten Tankanschluss T2 zugeordnete dritte Steuernut (30) aufweist, wobei die erste Steuernut (28) axial nach außen begrenzend einen ersten Steg (61) und die dritte Steuernut (30) axial nach außen begrenzend einen vierten Steg (64) aufweist, so dass sich dem ersten Steg (61) anschließend ein dritte Raum (77) und dem vierten Steg (64) anschließend ein vierter Raum (78) in jeder Kolbenstellung hydraulisch von - dem ersten Tankanschluss (T1),
- dem ersten Arbeitsanschluss (A),
- dem Versorgungsanschluss (P),
- dem zweiten Arbeitsanschluss (B) und
- dem zweiten Tankanschluss (T2)
getrennt sind, wobei ein Innenraum (75) innerhalb des Kolbens (19) den dritten Raum (77) und den vierten Raum (78) verbindet und wobei der an dem vom Stellglied (17) abgewandten Ende angeordnete vierte Raum (78) und der dritte (77) verschlossen sind.

6. Hydraulikventil (12) nach Patentanspruch 5,
**dadurch gekennzeichnet, dass**
der dem Stellglied (17) ferner stehende vierte Raum (78) mittels eines Verschlusses (76) hydraulisch verschlossen ist.

7. Hydraulikventil (12) nach Patentanspruch 5 oder 6,
**dadurch gekennzeichnet, dass**
der dem Stellglied (17) näher stehende dritte Raum (77) mit Hilfe des sich der ersten Innenlauffläche (13) anschließenden Poltopfes (37) verschlossen ist, wobei zum Verschließen des dritten Raumes (77) der Poltopf (37) an seinem von der Hydraulikbuchse (15) abgewandt ausgebildeten Boden (36) aufweist.

8. Hydraulikventil (12) nach einem der vorhergehenden Patentansprüche, **dadurch gekennzeichnet, dass** das Hydraulikventil (12) als Cartridge-Ventil ausgebildet ist, wobei die erste Innenlauffläche (13) an der Innenseite der Hydraulikbuchse (15) vorgesehen ist.

9. Hydraulikventil (12) nach einem der vorhergehenden Patentansprüche,
**dadurch gekennzeichnet, dass**
der Kolben (19) ein Drehteil ist, welches über ein Abstützteil (80) an einem Anker (20) abgestützt ist, welcher innerhalb des Poltopfes (37) geführt wird.

10. Hydraulikventil (12) nach einem der vorhergehenden Patentansprüche,
**dadurch gekennzeichnet, dass**
der Anker (20) über eine Länge (81) entlang der zweiten Innenlauffläche (43) geführt ist, über die der Poltopf (37) einteilig mit einem einheitlich durchgehenden Innendurchmesser (82) gefertigt ist, wobei sich diese Länge (81) axial über
- das Poljoch (33),
- die Außendurchmesserverengung (35) und
- zumindest teilweise über den Polkernkonus (32)
erstreckt.

11. Hydraulikventil (12) nach einem der vorhergehenden Patentansprüche,
**dadurch gekennzeichnet, dass**
der Anker (20) auf seiner Länge (83) einen gleichbleibenden Ankerdurchmesser (84) aufweist.

## Claims

1. Hydraulic valve (12) for a pivoting motor adjuster (14) of a camshaft (18), having a piston (19) which is guided longitudinally displaceably along a first inner running face (13) of a hydraulic liner (15) of the hydraulic valve (12) for the distribution of hydraulic fluid from a supply connector (P) to two adjacent working connectors (A, B), the piston (19) being longitudinally displaceable by means of an electromagnetically actuable actuator (17), and the actuator (17) having a pole element (37) of hollow configuration which is configured for receiving an armature (20) which is axially displaceable in the pole element (37), a coil (45) of the actuator (17) being configured so as to enclose the pole element (37) at least partially in such a way that, if a voltage is applied to the coil (45), a magnetic field is configured for the movement of the armature (20) in the actuator (17), and the hydraulic liner (15), through which the hydraulic fluid can flow, being configured so as to at least adjoin the pole element (37), and the pole element (37) having a tapered portion of its external diameter in the form of an external diameter constriction (35) in the region of the coil (45) in such a way that, starting from the external diameter constriction (35), the pole element (37) is configured in the form of a pole core cone (32) in the direction of the hydraulic liner (15) and is configured in the form of a pole yoke (33) in the direction which faces away from the hydraulic liner (15), and the hydraulic liner (15) being received in a bore (21) of a valve housing (65) of the hydraulic valve (12), **characterized in that**, in the region of its end which is configured so as to face the hydraulic liner (15), the pole core cone (32) has a sealing element (49) for sealing the bore (21) with respect to the coil (45), which sealing element (49) is received in an annular groove (47) of the pole core cone (33), which annular groove (47) faces the valve housing (65), the pole yoke (33), the pole core cone (32) and the hydraulic liner (15) which is connected fixedly to the pole core cone (32) being received with a common external diameter in the bore (21), and the pole core cone (33) receiving a shoulder of the hydraulic liner (15).

2. Hydraulic valve (12) according to Patent Claim 1, **characterized in that** the hydraulic liner (15) is inserted into the pole core cone (33) with the aid of an interference fit.

3. Hydraulic valve (12) according to Patent Claim 1 or 2, **characterized in that** the pole yoke (33) and the pole core cone (32) are configured in one piece.

4. Hydraulic valve (12) according to one of the preceding patent claims, **characterized in that** the hydraulic liner (15) is configured from an aluminium material.

5. Hydraulic valve (12) according to one of the preceding patent claims, **characterized in that**, in a manner which follows one another and is spaced apart axially, the following emanate from the first inner running face (13):
- a first tank connector (T1) for discharging hydraulic fluid from the first working connector (A),
- the first working connector (A) for conducting hydraulic fluid into a first pressure chamber (9) of the pivoting motor adjuster (14),
- the supply connector (P),
- the second working connector (B) for conducting hydraulic fluid into a second pressure chamber (10) of the pivoting motor adjuster (14), which second pressure chamber (10) is directed counter to the first pressure chamber (9), and
- a second tank connector (T2) for discharging hydraulic fluid from the second working connector (B),
the piston (19) having a first control groove (28) which is assigned to the first tank connector T1 and a third control groove (30) which is assigned to the second tank connector T2, the first control groove (28) having a first web (61) in a manner which delimits it axially towards the outside, and the third control groove (30) having a fourth web (64) in a manner which delimits it axially towards the outside, with the result that, adjoining the first web (61), a third space (77) and, adjoining the fourth web (64), a fourth space (78) are disconnected hydraulically in every piston position from
- the first tank connector (T1),
- the first working connector (A),
- the supply connector (P),
- the second working connector (B) and
- the second tank connector (T2),
an interior space (75) within the piston (19) connecting the third space (77) and the fourth space (78), and the fourth space (78), which is arranged at the end which faces away from the actuator (17), and the third space (77) being closed.

6. Hydraulic valve (12) according to Patent Claim 5, **characterized in that** the fourth space (78) which lies further away from the actuator (17) is closed hydraulically by means of a closure (76).

7. Hydraulic valve (12) according to Patent Claim 5 or 6, **characterized in that** the third space (77) which lies closer to the actuator (17) is closed with the aid of the pole pot (37) which adjoins the first inner running face (13), the pole pot (37) having on its bottom (36) which is configured so as to face away from the hydraulic liner (15), in order to close the third space (77).

8. Hydraulic valve (12) according to one of the preceding patent claims, **characterized in that** the hydraulic valve (12) is configured as a cartridge valve, the first inner running face (13) being provided on the inner side of the hydraulic liner (15).

9. Hydraulic valve (12) according to one of the preceding patent claims, **characterized in that** the piston (19) is a turned part which is supported via a supporting part (80) on an armature (20) which is guided within the pole pot (37).

10. Hydraulic valve (12) according to one of the preceding patent claims, **characterized in that** the armature (20) is guided along the second inner running face (43) over a length (81), over which the pole pot (37) is manufactured in one piece with a uniformly continuous internal diameter (82), the said length (81) extending axially over
- the pole yoke (33),
- the external diameter constriction (35), and
- at least partially over the pole core cone (32).

11. Hydraulic valve (12) according to one of the preceding patent claims, **characterized in that** the armature (20) has an unchanging armature diameter (84) over its length (83).

## Revendications

1. Vanne de commande hydraulique (12) pour un déphaseur à moteur oscillant (14) d'un arbre à cames (18), avec un piston (19) guidé de façon à pouvoir coulisser dans le plan longitudinal le long d'une première surface de roulement intérieure (13) d'une douille hydraulique (15) de la vanne de commande hydraulique (12) pour amener le fluide hydraulique d'un raccord d'alimentation (P) à deux raccords de travail (A, B) connexes, le piston (19) pouvant être coulissé dans le sens longitudinal à l'aide d'un élément de déphasage (17) actionnable de façon électromagnétique et l'élément de déphasage (17) comportant un élément de pôle (37) réalisé de façon creuse réalisé pour loger une ancre (20) pouvant coulisser dans le plan axial dans l'élément de pôle (37), une bobine (45) de l'élément de déphasage (17) étant configurée pour comprendre au moins en partie l'élément de pôle (37), de telle sorte qu'en cas d'application d'une tension à la bobine (45), un champ magnétique soit réalisé dans l'élément de déphasage (17) pour déplacer l'ancre (20) et la douille hydraulique (15) étant réalisée de façon à pouvoir être traversée au moins de façon adjacente par le fluide hydraulique au niveau de l'élément de pôle (37) et l'élément de pôle (37) comportant, dans la zone de la bobine (45), un rétrécissement de son diamètre extérieur sous la forme d'un resserrement de diamètre extérieur (35), de telle sorte qu'en partant du resserrement de diamètre extérieur (35) en direction de la douille hydraulique (15), l'élément de pôle (37) soit réalisé sous la forme d'un cône de noyau de pôle (32) et que dans la direction opposée à la douille hydraulique (15), il soit réalisé sous la forme d'un joug de pôle (33) et la douille hydraulique (15) étant logée dans un alésage (21) d'un carter de vanne de commande (65) de la vanne de commande hydraulique (12) ;
**caractérisée en ce que** :
le cône de noyau de pôle (32) comporte, dans la zone de son extrémité réalisée de façon à être orientée vers la douille hydraulique (15), un élément d'étanchéité (49) logé une rainure annulaire (47) du cône de noyau de pôle (33) orientée vers le carter de vanne de commande (65) pour étanchéifier l'alésage (21) par rapport à la bobine (45), le joug de pôle (33), le cône de noyau de pôle (32) et la douille hydraulique (15) reliée fixement au cône de noyau de pôle (32) étant logés, avec un diamètre extérieur commun, dans l'alésage (21) et le cône de noyau de pôle (33) logeant un épaulement de la douille hydraulique (15).

2. Vanne de commande hydraulique (12) selon la revendication 1, **caractérisée en ce que** la douille hydraulique (15) est insérée dans le cône de noyau de pôle (33) à l'aide d'un ajustage serré.

3. Vanne de commande hydraulique (12) selon la revendication 1 ou 2, **caractérisée en ce que** le joug de pôle (33) et le cône de noyau de pôle (32) sont réalisés d'un seul tenant.

4. Vanne de commande hydraulique (12) selon l'une quelconque des revendications précédentes, **caractérisée en ce que** la douille hydraulique (15) est réalisée à partir d'un matériau en aluminium.

5. Vanne de commande hydraulique (12) selon l'une quelconque des revendications précédentes,
**caractérisée en ce que** :
se suivent dans le plan axial à une certaine distance les uns des autres :
- un premier raccord de réservoir (T1) pour évacuer le fluide hydraulique provenant du premier raccord de travail (A) ;
- le premier raccord de travail (A) pour amener le fluide hydraulique dans une première chambre de pression (9) du déphaseur à moteur oscillant (14) ;
- le raccord d'alimentation (P) ;
- le deuxième raccord de travail (B) pour amener le fluide hydraulique dans une deuxième chambre de pression (10) du déphaseur à moteur oscillant (14) orientée à l'opposé de la première chambre de pression (9) ; et
- un deuxième raccord de réservoir (T2) pour évacuer le fluide hydraulique sortant du deuxième raccord de travail (B) à partir de la première surface de roulement intérieure (13), le piston (19) comportant une première rainure de commande (28) associée au premier raccord de réservoir T1 et une troisième rainure de commande (30) associée au deuxième raccord de réservoir T2, la première rainure de commande (28) comportant un premier étai (61) réalisant la délimitation vers l'extérieur le plan axial et la troisième rainure de commande (30) comportant un quatrième étai (64) réalisant la délimitation vers l'extérieur dans le plan axial, de sorte qu'une troisième chambre (77) suivant le premier étai (61) et qu'une quatrième chambre (78) suivant le quatrième étai (64) soient séparées sur le plan hydraulique dans chaque position de piston :
- du premier raccord de réservoir (T1);
- du premier raccord de travail (A) ;
- du raccord d'alimentation (P) ;
- du deuxième raccord de travail (B) ; et
- du deuxième raccord de réservoir (T2) ;
une chambre intérieure (75) reliant, à l'intérieur du piston (19), la troisième chambre (77) et la quatrième chambre (78) et la quatrième chambre (78) disposée au niveau de l'extrémité opposée de l'élément de déphasage (17) et la troisième chambre (77) étant fermées.

6. Vanne de commande hydraulique (12) selon la revendication 5, **caractérisée en ce que** la quatrième chambre (78) plus éloignée de l'élément de déphasage (17) est fermée sur le plan hydraulique à l'aide d'une fermeture (76).

7. Vanne de commande hydraulique (12) selon la revendication 5 ou 6, **caractérisée en ce que** la troisième chambre (77) située plus près de l'élément de déphasage (17) est fermée à l'aide du pot de pôle (37) connexe à la première surface de roulement intérieure (13), le pot de pôle (37) comportant au niveau de son fond (36) réalisé à l'opposé de la douille hydraulique (15) pour fermer la troisième chambre (77).

8. Vanne de commande hydraulique (12) selon l'une quelconque des revendications précédentes, **caractérisée en ce que** la vanne de commande hydraulique (12) est réalisée sous la forme d'une vanne de commande à cartouche, la première surface de roulement intérieure (13) étant prévue au niveau du côté intérieur de la douille hydraulique (15).

9. Vanne de commande hydraulique (12) selon l'une quelconque des revendications précédentes, **caractérisée en ce que** le piston (19) est une partie tournante maintenue via une pièce de maintien (80) au niveau d'une ancre (20) guidée à l'intérieur du pot de pôle (37).

10. Vanne de commande hydraulique (12) selon l'une quelconque des revendications précédentes, **caractérisée en ce que** l'ancre (20) est guidée sur une longueur (81), le long de la deuxième surface de roulement intérieure (43), sur laquelle le pot de pôle (37) est fabriqué d'un seul tenant avec un diamètre intérieur (82) traversant de façon uniforme, cette longueur (81) s'étendant dans le plan axial sur :
- le joug de pôle (33) ;
- le resserrement de diamètre extérieur (35) ; et
- au moins en partie sur le cône de noyau de pôle (32) .

11. Vanne de commande hydraulique (12) selon l'une quelconque des revendications précédentes, **caractérisée en ce que** l'ancre (20) présente sur sa longueur (83) un diamètre d'ancre (84) régulier.
